# EUROPÄISCHE PATENTSCHRIFT

(11) **EP 1 540 803 B1**
(45) Veröffentlichungstag und Bekanntmachung des Hinweises auf die Patenterteilung: **05.05.2010**
(21) Anmeldenummer: 03750278.8
(22) Anmeldetag: 20.08.2003
(51) Int. Cl.: H02M 1/00

(54) **ELEKTRISCHE SCHALTUNG ZUR SPANNUNGSWANDLUNG UND VERWENDUNG DER ELEKTRISCHEN SCHALTUNG**
ELECTRICAL CIRCUIT FOR VOLTAGE TRANSFORMATION AND USE OF SAID ELECTRICAL CIRCUIT
CIRCUIT ELECTRIQUE CONVERTISSEUR DE TENSION ET UTILISATION DU CIRCUIT ELECTRIQUE

(30) Priorität: 20.09.2002 DE 10243860
(43) Veröffentlichungstag der Anmeldung: 15.06.2005
(73) Patentinhaber: Osram Gesellschaft mit beschränkter Haftung, 81543 München (DE)
(72) Erfinder: HONSBERG-RIEDL, Martin, 83317 Teisendorf (DE); CZEKAY, Dietmar, 04155 Leipzig (DE)
(86) Internationale Anmeldenummer: PCT/DE2003/002774
(87) Internationale Veröffentlichungsnummer: WO 2004/030190

(56) Entgegenhaltungen:
- EP-A- 0 696 841
- DE-A- 19 505 417
- DE-A- 19 811 932
- US-A- 5 642 267
- US-A- 6 118 225
- US-A1- 2002 130 648

## Beschreibung

Die Erfindung betrifft eine elektrische Schaltung zur Spannungswandlung und eine Verwendung der elektrischen Schaltung.

Eine Vielzahl elektrischer Geräte wird mit Gleichstrom beziehungsweise Gleichspannung betrieben. Zum Betrieb eines solchen Geräts wird aus einer Wechselspannung eines Netzes eine Gleichspannung geformt. Dies gelingt beispielsweise mit Hilfe einer elektrischen Eingangsschaltung mit Gleichrichterdiode und Pufferkondensator. Nachteilig daran ist, dass Strom nur dann aus dem Netz in den Pufferkondensator fließen kann, wenn die Spannung am Pufferkondensator kleiner ist als die Netzspannung. Es resultiert ein hoher nicht sinusförmiger Pulsstrom mit einer entsprechend hohen Belastung des Netzes mit Oberschwingungen. Als Folge davon zeichnet sich die Eingangsschaltung durch einen geringen Leistungsfaktor aus. Der Leistungsfaktor ist abhängig von der Phasenverschiebung zwischen Strom und Spannung am Anschlusspunkt eines über die Eingangsschaltung gespeisten elektrischen Geräts. Ein geringer Leistungsfaktor bedeutet neben einer geringen Wirkleistung einen relativ hohen Verlust an Blind- und Oberschwingungsleistung.

Zur Reduktion der Oberschwingungen und damit zur Erhöhung des Leistungsfaktors wird eine sogenannte Leistungsfaktorkorrektur (Power Factor Correction, PFC) durchgeführt. Die Leistungsfaktorkorrektur führt dazu, dass Spannung und Strom in Phase verlaufen. Die relative Stromamplitude folgt der relativen Spannungsamplitude. Als Folge davon verhält sich die Eingangsschaltung gegenüber des Netz nahezu als ohmscher Widerstand.

Eine heutige Leistungsfaktorkorrekturschaltung, die beispielsweise in einem sogenannten elektronischen Vorschaltgerät (EVG) realisiert ist, wird bei einer Schaltfrequenz aus dem Bereich von 20 kHz bis 100 kHz betrieben. Bei diesen Schaltfrequenzen ist ein hoher Wirkungsgrad und eine gute Leistungsfaktorkorrektur möglich. Bei einer bestimmten Leistung kann allerdings die Baugröße des EVGs aufgrund der für erforderlichen Induktivitäten und Kapazitäten nur begrenzt verringert werden. Eine deutliche Verringerung der Baugröße des EVGs beziehungsweise der Leitungsfaktorkorrekturschaltung ließe sich beispielsweise durch Erhöhung der Schaltfrequenz erreichen. Bei einer Schaltfrequenz aus dem MHz-Bereich verringert sich allerdings der Wirkungsgrad der Leistungsfaktorkorrekturschaltung.

US-A-5.642.267 offenbart gattungsgemäße Schaltungen.

Aufgabe der vorliegenden Erfindung ist es, eine elektrische Schaltung anzugeben, die als Leistungsfaktorkorrekturschaltung verwendet werden kann, wobei auch bei einer Schaltfrequenz aus dem MHz-Bereich eine gute Leistungsfaktorkorrektur bei hohem Wirkungsgrad möglich sein soll.

Gemäß einer ersten Lösung der Aufgabe wird eine elektrische Schaltung zur Spannungswandlung angegeben, aufweisend mindestens einen Eingangsanschluss zum Einspeisen einer elektrischen Eingangsleistung durch Anlegen einer sich zeitlich gegenüber einem elektrischen Bezugspotential ändernden, positiven elektrischen Gleichspannung, mindestens einen Bezugspotentialanschluss zum Anlegen des Bezugspotentials, mindestens einen Ausgangsanschluss zur Entnahme einer elektrischen Ausgangsleistung, mindestens eine Eingangsdiode mit einer Anode und einer Kathode, mindestens eine Ausgangsdiode mit einer Anode und einer Kathode, mindestens eine Eingangskapazität mit einer Elektrode und einer Gegenelektrode, mindestens eine Transferkapazität mit einer Elektrode und einer Gegenelektrode, mindestens eine Eingangsinduktivität mit einem Induktivitätsanschluss und einem weiteren Induktivitätsanschluss und mindestens eine Fußpunktsinduktivität mit einem Induktivitätsanschluss und einem weiteren Induktivitätsanschluss, wobei die Anode der Eingangsdiode und der Eingangsanschluss einen gemeinsamen Knotenpunkt aufweisen, die Kathode der Eingangsdiode, der Induktivitätsanschluss der Eingangsinduktivität und die Elektrode der Eingangskapazität einen gemeinsamen Knotenpunkt aufweisen, die Gegenelektrode der Eingangskapazität, der Bezugspotentialanschluss und der Induktivitätsanschluss der Fußpunktsinduktivität einen gemeinsamen Knotenpunkt aufweisen, der weitere Induktivitätsanschluss der Eingangsinduktivität und die Elektrode der Transferkapazität einen gemeinsamen Knotenpunkt aufweisen, die Gegenelektrode der Transferkapazität und der weitere Induktivitätsanschluss der Fußpunktsinduktivität einen gemeinsamen Knotenpunkt aufweisen, ein Hochfrequenzschalter zum Herstellen und/oder Unterbrechen einer elektrisch leitenden Verbindung zwischen dem Bezugspotentialanschluss und dem gemeinsamen Knotenpunkt des weiteren Induktivitätsanschlusses der Eingangsinduktivität und der Elektrode der Transferkapazität und ein Mittel zum Weiterleiten der elektrischen Ausgangsleistung an den Ausgangsanschluss vorhanden sind, wobei das Mittel die Fußpunktsinduktivität und die Ausgangsdiode aufweist und die Kathode der Ausgangsdiode mit dem Ausgangsanschluss einen gemeinsamen Knotenpunkt aufweisen.

Gemäß einer zweiten Lösung der Aufgabe wird eine elektrische Schaltung zur Spannungswandlung angegeben, aufweisend mindestens einen Eingangsanschluss zum Einspeisen einer elektrischen Eingangsleistung durch Anlegen einer sich zeitlich gegenüber einem elektrischen Bezugspotential ändernden, negativen elektrischen Gleichspannung, mindestens einen Bezugspotentialanschluss zum Anlegen des Bezugspotentials, mindestens einen Ausgangsanschluss zur Entnahme einer elektrischen Ausgangsleistung, mindestens eine Eingangsdiode mit einer Anode und einer Kathode, mindestens eine Ausgangsdiode mit einer Anode und einer Kathode, mindestens eine Eingangskapazität mit einer Elektrode und einer Gegenelektrode, mindestens eine Transferkapazität mit einer Elektrode und einer Gegenelektrode, mindestens eine Eingangsinduktivität mit einem Induktivitätsanschluss und einem weiteren Induktivitätsanschluss und mindestens eine Fußpunktsinduktivität mit einem Induktivitätsanschluss und einem weiteren Induktivitätsanschluss, wobei die Kathode der Eingangsdiode und der Eingangsanschluss einen gemeinsamen Knotenpunkt aufweisen, die Anode der Eingangsdiode, der Induktivitätsanschluss der Eingangsinduktivität und die Elektrode der Eingangskapazität einen gemeinsamen Knotenpunkt aufweisen, die Gegenelektrode der Eingangskapazität, der Bezugspotentialanschluss und der Induktivitätsanschluss der Fußpunktsinduktivität einen gemeinsamen Knotenpunkt aufweisen, der weitere Induktivitätsanschluss der Eingangsinduktivität und die Elektrode der Transferkapazität einen gemeinsamen Knotenpunkt aufweisen, die Gegenelektrode der Transferkapazität und der weitere Induktivitätsanschluss der Fußpunktsinduktivität einen gemeinsamen Knotenpunkt aufweisen, ein Hochfrequenzschalter zum Herstellen und/oder Unterbrechen einer elektrisch leitenden Verbindung zwischen dem Bezugspotentialanschluss und dem gemeinsamen Knotenpunkt des weiteren Induktivitätsanschlusses der Eingangsinduktivität und der Elektrode der Transferkapazität und ein Mittel zum Weiterleiten der elektrischen Ausgangsleistung an den Ausgangsanschluss vorhanden sind, wobei das Mittel die Fußpunktsinduktivität und die Ausgangsdiode aufweist und die Anode der Ausgangsdiode mit dem Ausgangsanschluss einen gemeinsamen Knotenpunkt aufweisen.

Gemäß einem weiteren Aspekt der Erfindung werden die beschriebenen elektrischen Schaltungen zur Leistungsfaktorkorrektur verwendet, wobei eine eingespeiste elektrische Eingangsleistung leistungsfaktorkorrigiert wird.

Die aus dem Netz entnommene Leistung wird im Leistungsfaktor korrigiert.

Die beiden Lösungen der Aufgabe unterscheiden sich dadurch, dass die elektrische Eingangsleistung gemäß der ersten Lösung durch Anlegen einer gegenüber dem Bezugspotential positiven Gleichspannung und gemäß der zweiten Lösung durch Anlegen einer gegenüber dem Bezugspotential negativen Gleichspannung eingespeist werden kann. Dementsprechend sind die Kontaktierungen der Eingangsdiode und der Ausgangsdiode der beiden Lösungen zueinander entgegengesetzt. Der Bezugspotentialanschluss ist beispielsweise geerdet, so dass das Bezugspotential das Erdpotential ist.

Die angelegte Gleichspannung ist vornehmlich eine mit einer relativ niedrigen Frequenz pulsierende Gleichspannung. Beispielsweise wird die Gleichspannung mit Hilfe einer Gleichrichterschaltung aus einer üblichen, sinusförmigen Wechselspannung eines öffentlichen Stromnetzes gewonnen. Somit liegt am Eingangsanschluss beispielsweise eine mit einer Frequenz von 100 Hz pulsierende Gleichspannung von 230 V an. Denkbar ist auch, dass die Eingangsleistung mit Hilfe einer stark gestörten Netzspannung mit überlagerten Strompulsen eingespeist wird.

Durch die elektrischen Schaltungen wird die Eingangsleistung leistungsfaktorkorrigiert. Entsprechend der Schaltfrequenz des Hochfrequenzschalters wird die Ausgangsleistung aus der elektrischen Schaltung ausgekoppelt. Eine Schaltfrequenz des Hochfrequenzschalters ist aus dem MHz-Frequenzbereich gewählt. Es wird eine Ausgangsleistung aus der elektrischen Schaltung entnommen, die eine mit der Schaltfrequenz des Hochfrequenzschalters pulsierende Gleichspannung aufweist. Dabei hat sich gezeigt, dass basierend auf den beschriebenen Schaltungen bei guter Leistungsfaktorkorrektur auch bei einer Schaltfrequenz aus dem MHz-Frequenzbereich ein hoher Wirkungsgrad von 80% bis 95% erzielt werden kann. Dies ist insbesondere dann möglich, wenn hochfrequenztaugliche Bauelemente (Schalttransistoren, Kapazitäten, Induktivitäten und Dioden) für die elektrischen Schaltungen verwendet werden.

In einer besonderen Ausgestaltung weist das Mittel zum Weiterleiten der elektrischen Ausgangsleistung an den Ausgangsanschluss den gemeinsame Knotenpunkt der Gegenelektrode der Transferkapazität und des weiteren Induktivitätsanschlusses der Fußpunktsinduktivität auf. Gemäß einer Weiterbildung der ersten Lösung sind dieser Knotenpunkt und die Anode der Ausgangsdiode elektrisch leitend verbunden. Gemäß einer Weiterbildung der zweiten Lösung sind dieser Knotenpunkt und die Kathode der Ausgangsdiode elektrisch leitend verbunden.

Beispielsweise wird ein Hochfrequenzschalter mit einem Schalttransistor verwendet. Der Hochfrequenzschalter wird durch einen Schalttransistor verkörpert. Bei geeigneter Abstimmung der reaktiven Bauelemente, der Schaltfrequenz und einer Einschaltdauer des Hochfrequenzschalters kann eine deutliche Schalt-Entlastung des Schalttransistors erzielt werden. Eine Einschaltspannung des Schalttransistors kann dabei um bis zu 80% reduziert werden, wodurch nahezu ein sogenanntes zero voltage switching (ZVS) realisiert werden kann. Es tritt bei niedriger Sperrspannungsbelastung des Schalttransistors ein niedriger Schaltverlust des Hochfrequenzschalters auf, der zum hohen Wirkungsgrad der Schaltung beiträgt.

In einer besonderen Ausgestaltung umfasst das Mittel zum Weiterleiten der elektrischen Ausgangsleistung mindestens einen weiteren Bezugspotentialanschluss zum Anlegen eines weiteren Bezugspotentials und mindestens einen Transformator, der mindestens eine Primärinduktivität mit einem Induktivitätsanschluss und einem weiteren Induktivitätsanschluss und mindestens eine Sekundärinduktivität mit einem Induktivitätsanschluss und einem weiteren Induktivitätsanschluss aufweist, wobei die Primärinduktivität die Fußpunktsinduktivität aufweist und der Induktivitätsanschluss der Sekundärinduktivität und der weitere Bezugspotentialanschluss einen gemeinsamen Knotenpunkt aufweisen. Gemäß einer Weiterbildung der ersten Lösung weisen der weitere Induktivitätsanschluss und die Anode der Ausgangsdiode einen gemeinsamen Knotenpunkt auf. Gemäß einer Weiterbildung der zweiten Lösung weisen der weitere Induktivitätsanschluss und die Kathode der Ausgangsdiode einen gemeinsamen Knotenpunkt auf.

Der Bezugspotentialanschluss und der weitere Bezugspotentialanschluss können einen gemeinsamen Knotenpunkt aufweisen. Das Bezugspotential und das weitere Bezugspotential können somit gleich sein. Die Bezugspotentialanschlüsse können aber auch keinen gemeinsamen Knotenpunkt aufweisen. Bezugspotential und weiteres Bezugspotential können sich somit auch voneinander unterscheiden.

Im Vergleich zu den vorangegangenen Beispielen wird an Stelle der Fußpunktsinduktivität ein Transformator verwendet. Die Primärinduktivität des Transformators übernimmt die Funktion der Fußpunktsinduktivität der elektrischen Schaltung. Primärinduktivität und Sekundärinduktivität sind miteinander gekoppelt. Eine Sperrspannungsbelastung des Schalttransistors bei Verwendung eines Transformators ist im Vergleich zur Sperrspannungsbelastung des Schalttransistors bei Verwendung der Fußpunktsinduktivität gemäß vorhergehend beschriebener Ausführungsformen mit einem Faktor von 1,3 bis 2,0 deutlich höher. Dafür kann mit Hilfe des Transformators eine normgerechte galvanische Trennung zwischen Eingangsanschluss und Ausgangsanschluss realisiert werden.

In einer besonderen Ausgestaltung weist das Mittel zum Weiterleiten der elektrischen Ausgangsleistung mindestens eine Ausgangskapazität mit einer Elektrode und einer Gegenelektrode auf, wobei die Gegenelektrode der Ausgangskapazität und der gemeinsame Knotenpunkt des weiteren Bezugspotentialanschlusses und des Induktivitätsanschlusses der Sekundärinduktivität elektrisch leitend verbunden sind. In Weiterbildung der ersten Lösung sind die Elektrode der Ausgangskapazität und der gemeinsame Knotenpunkt des weiteren Induktivitätsanschlusses der Sekundärinduktivität und der Anode der Ausgangsdiode elektrisch leitend verbunden. Dagegen sind in Weiterbildung der zweiten Lösung die Elektrode der Ausgangskapazität und der gemeinsame Knotenpunkt des weiteren Induktivitätsanschlusses der Sekundärinduktivität und der Kathode der Ausgangsdiode elektrisch leitend verbunden.

In einer besonderen Ausgestaltung ist der Transformator ein Hochfrequenz-Hochvolt (HF-HV)-Transformator. Ein derartiger Transformator wurde beispielsweise in der deutschen Patentanmeldung 10232952.4 vorgeschlagen. Der Transformator kann trotz kleiner Baugröße bei einer Frequenz von bis zu 200 MHz und einer Spannung von bis zu 2000 V betrieben werden. Der Transformator zeichnet sich durch einen hohen Leistungsdurchsatz, eine hohe Güte und damit geringe Verluste aus.

In einer weiteren Ausgestaltung ist zur Schaltentlastung des Hochfrequenzschalters mindestens eine Abstimmkapazität mit einer Elektrode und einer Gegenelektrode vorhanden ist, wobei die Elektrode der Abstimmkapazität und der gemeinsame Knotenpunkt des weiteren Induktivitätsanschlusses der Eingangsinduktivität und der Elektrode der Transferkapazität elektrisch leitend verbunden sind und die Gegenelektrode der Abstimmkapazität und der Bezugspotentialanschluss elektrisch leitend verbunden sind. Mit Hilfe der Abstimmkapazität kann die Be- bzw. Entlastung des Schalttransistors des Hochfrequenzschalters relativ leicht manipuliert und somit der Wirkungsgrad der Schaltung optimiert werden. Damit kann beispielsweise das bereits oben erwähnte zero voltage switching erreicht werden.

Der Hochfrequenzschalter weist beispielsweise einen IGBT oder einen Hochfrequenz-Bipolar-Transistor auf. Insbesondere weist der Hochfrequenzschalter mindestens einen MOS-Transistor auf. Gemäß der ersten Lösung ist der MOS-Transistor als n-Kanal-MOSFET, gemäß der zweiten Lösung als p-Kanal-MOSFET ausgestaltet. Der MOS-Transistor ist insbesondere ein CoolMOS®-Transistor. Diese Transistoren sind für Hochfrequenzanwendungen geeignet. Insbesondere weist der Hochfrequenzschalter eine aus dem Bereich von einschließlich 500 kHz bis einschließlich 200 MHz ausgewählte Schaltfrequenz auf. Eine gute Leistungsfaktorkorrektur kann auch bei diesen hohen Schaltfrequenzen mit einem hohen Wirkungsgrad erzielt werden. Die Schaltfrequenz beträgt beispielsweise etwa 2,7 MHz. Die Einschaltdauer (Dauer des hergestellten Kontakts zwischen dem weiteren Induktivitätsanschluss der Eingangsinduktivität, der Elektrode der Transferkapazität und des Bezugspotentialanschlusses) beträgt beispielsweise etwa 80 ns.

Die elektrischen Schaltungen können zur Leistungsregelung herangezogen werden. Dies erfolgt insbesondere durch Pulsweitenmodulation, bei der einzelne Pulse unterdrückt werden. Alternativ dazu kann zur Leistungsregelung auch die Einschaltdauer des Hochfrequenzschalters variiert werden.

Insbesondere sind neben dem Hochfrequenzschalter die weiteren Bauelemente der elektrischen Schaltung hochfrequenztauglich. So weisen die Eingangskapazität und/oder die Transferkapazität mindestens einen Hochfrequenzkondensator mit einer aus dem Bereich von einschließlich 10 pF bis einschließlich 1000 pF ausgewählten Kapazität auf. Die Abstimmkapazität weist mindestens einen Hochfrequenzkondensator mit einer aus dem Bereich von einschließlich 10 pF bis einschließlich 200 pF ausgewählten Kapazität auf. Die Ausgangskapazität weist mindestens einen Hochfrequenzkondensator mit einer aus dem Bereich von einschließlich 300 pF bis einschließlich 3000 pF ausgewählten Kapazität auf. Vorteilhaft weisen die Eingangsinduktivität, die Fußpunktsinduktivität, die Primärinduktivität und/oder die Sekundärinduktivität eine aus dem Bereich von einschließlich 0,3 µH bis 100 µH ausgewählte Induktivität auf. Insbesondere ist die Induktivität aus dem Bereich von 4 µH bis 40 µH ausgewählt. Die Eingangsdiode und/oder die Ausgangsdiode ist vorteilhaft eine Schottkydiode. Insbesondere weist die Schottkydiode mindestens ein aus der Gruppe SiC (Siliziumcarbid) und/oder GaAs (Galliumarsenid) ausgewähltes Diodenmaterial auf.

Zusammenfassend ergeben sich mit der Erfindung folgende wesentlichen Vorteile:
- Die elektrischen Schaltungen bestehen aus einer relativ geringen Anzahl von Bauelementen.
- Durch die geringe Anzahl von Bauelementen und durch die Verwendung von hochfrequenztauglichen Induktivitäten und Kapazitäten kann der Aufbau der elektrischen Schaltungen miniaturisiert werden.
- Mit den elektrischen Schaltungen ist eine sehr gute Leistungsfaktorkorrektur mit einem hohen Wirkungsgrad von 80% bis 95% im MHz-Frequenzbereich erzielbar.
- Die Schaltungen können zur Leistungsregelung herangezogen werden.

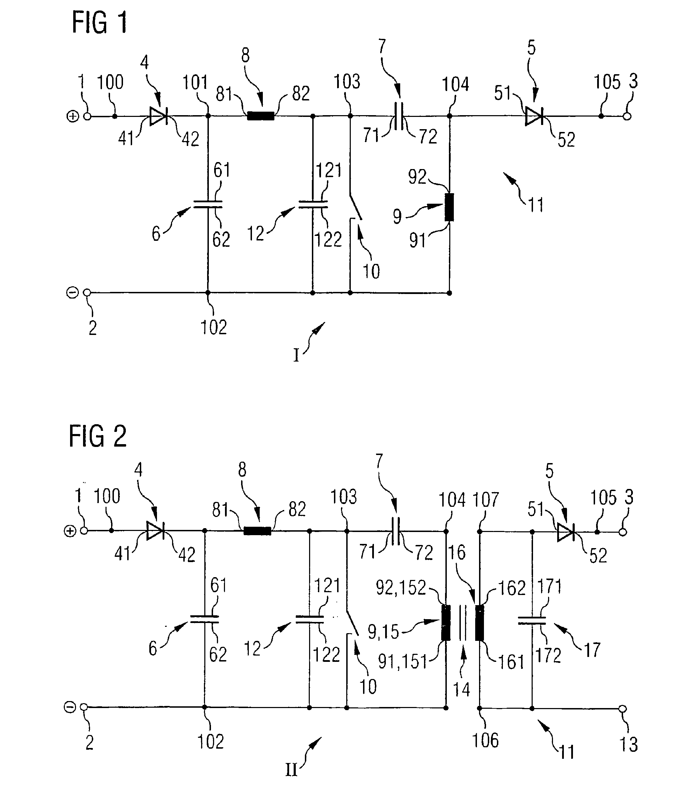

Anhand mehrerer Beispiele und der dazugehörigen schematischen Figuren wird die Erfindung im Folgenden näher beschrieben. Die Figuren 1 bis 4 zeigen jeweils ein Schaltbild einer elektrischen Schaltung zur Spannungswandlung.

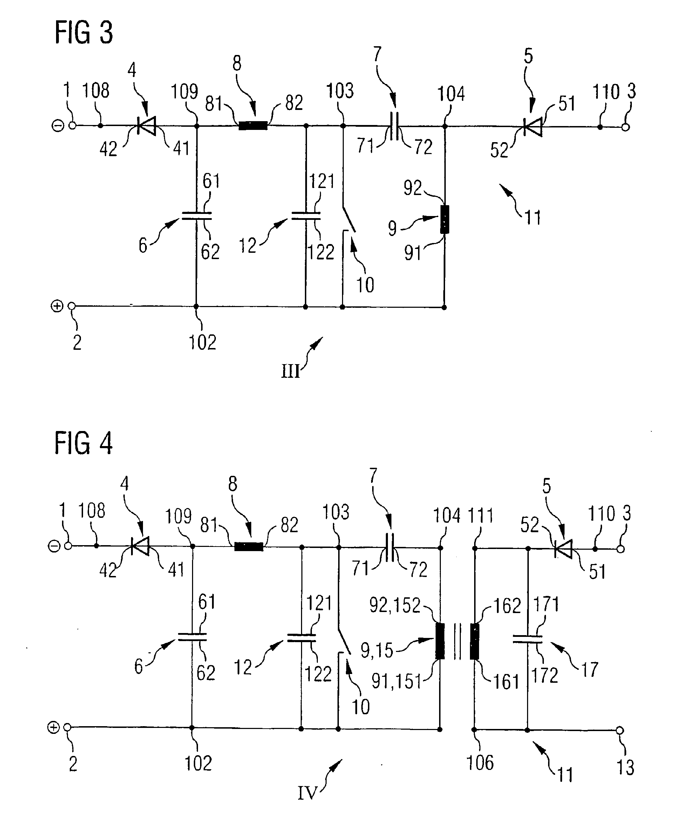

Die elektrischen Schaltungen I (Figur 1), II (Figur 2), III (Figur 3) und IV (Figur 4) weisen einen Eingangsanschluss 1 zum Einspeisen einer elektrischen Eingangsleistung durch Anlegen einer sich zeitlich gegenüber einem Bezugspotential ändernden elektrischen Gleichspannung, einen Bezugspotentialanschluss 2 zum Anlegen des Bezugspotentials und einen Ausgangsanschluss 3 zur Entnahme einer elektrischen Ausgangsleistung auf. Als reaktive Bauelemente weisen die elektrischen Schaltungen eine Eingangsdiode 4, eine Ausgangsdiode 5, eine Eingangskapazität 6, eine Transferkapazität 7, eine Eingangsinduktivität 8, eine Fußpunktsinduktivität 9 und einen Hochfrequenzschalter 10 auf. Daneben ist jeweils ein Mittel 11 zum Weiterleiten der elektrischen Ausgangsleistung an den Ausgangsanschluss 3 vorhanden, wobei die Ausgangsdiode 3 und die Fußpunktsinduktivität 9 die wesentlichen des Mittels 11 sind. Zusätzlich verfügen die elektrischen Schaltungen I bis IV jeweils über eine Abstimmkapazität 12 zur Manipulation der Schaltentlastung des Hochfrequenzschalters 10. Die Abstimmkapazität 12 ist aber für die Funktion der Schaltungen I - IV nicht unbedingt notwendig. Daher ist die Abstimmkapazität 12 in weiteren, nicht dargestellten Ausführungsbeispielen weggelassen.

Die Bauelemente sind hochfrequenztauglich. Eingangsdiode 4 und Ausgangsdiode 5 sind jeweils Schottkydioden mit SiC als Diodenmaterial. Alternativ dazu ist das Diodenmaterial der Schottkydioden GaAs. Die Eingangskapazität 6 weist einen Hochfrequenzkondensator mit einer Kapazität von etwa 500 pF auf. Die Abstimmkapazität 12 weist einen Hochfrequenzkondensator mit einer Kapazität von etwa 100 pF und die Transferkapazität 7 einen Hochfrequenzkondensator mit einer Kapazität von etwa 250 pF auf. Die Induktivität der Eingangsinduktivität 8 und Fußpunktsinduktivität 9 ist aus dem Bereich von 4 µH bis 40 µH ausgewählt. Der Hochfrequenzschalter 10 weist einen CoolMOS®-Transistor und kann mit einer Schaltfrequenz aus dem Bereich von 500 kHz bis 200 MHz betrieben werden.

Die am Eingangsanschluss 1 anzulegende Gleichspannung ist eine von einer Netzwechselspannung durch Gleichrichtung in einer nicht dargestellten Gleichrichterschaltung erzeugte pulsierende Gleichspannung von 230 V und einer Frequenz von 100 Hz. Am Ausgangsanschluss 3 ist über eine nicht dargestellte Last die elektrische Ausgangsleistung entnehmbar.

Die Elemente der Schaltungen I bis IV sind wie folgt zueinander angeordnet:
- Jeweils eine der Elektroden (Anode 41 oder Kathode 42) der Eingangsdiode 4 und der Eingangsanschluss 1 sind elektrisch leitend miteinander verbunden und weisen den gemeinsamen Knotenpunkt 100 oder 108 auf.
- Die jeweilige Gegenelektrode (Kathode 42 oder Anode 41) der Eingangsdiode 4, der Induktivitätsanschluss 81 der Eingangsinduktivität 8 und die Elektrode 61 der Eingangskapazität 6 sind elektrisch leitend miteinander verbunden und weisen den gemeinsamen Knotenpunkt 101 auf.
- Die Gegenelektrode 62 der Eingangskapazität 6, der Bezugspotentialanschluss 2 und der Induktivitätsanschluss 91 der Fußpunktsinduktivität 9 sind elektrisch leitend miteinander verbunden und weisen den gemeinsamen Knotenpunkt 102 auf.
- Der weitere Induktivitätsanschluss 82 der Eingangsinduktivität 8 und die Elektrode 71 der Transferkapazität 7 sind elektrisch leitend miteinander verbunden und weisen den gemeinsamen Knotenpunkt 103 auf.
- Die Gegenelektrode 72 der Transferkapazität 7 und der weitere Induktivitätsanschluss 92 der Fußpunktsinduktivität 9 sind elektrisch leitend miteinander verbunden und weisen den gemeinsamen Knotenpunkt 104 auf.
- Der Hochfrequenzschalter 10 ist derart angeordnet, dass eine elektrisch leitenden Verbindung zwischen dem Bezugspotentialanschluss 2 und dem gemeinsamen Knotenpunkt 103 des weiteren Induktivitätsanschlusses 82 der Eingangsinduktivität 8 und der Elektrode 71 der Transferkapazität 7 mit der Schaltfrequenz des Hochfrequenzschalters 10 hergestellt und/oder unterbrochen werden kann.
- Jeweils eine der Elektroden (Anode 51 oder Kathode 52) der Ausgangsdiode 5 und der Ausgangsanschluss 3 sind elektrisch leitend miteinander verbunden und weisen den gemeinsamen Knotenpunkt 105 oder 110 auf.

### Beispiel 1:

Das Schaltbild der zugehörigen elektrischen Schaltung I ist in Figur 1 dargestellt. Über den Eingangsanschluss 1 wird eine positive Gleichspannung angelegt (erste Lösung der zugrunde liegenden Aufgabe). Die Anode 41 der Eingangsdiode 4 und der Eingangsanschluss 1 weisen den gemeinsamen Knotenpunkt 100 auf. Die Kathode 42 der Eingangsdiode 4 weist zusammen mit dem Induktivitätsanschluss 81 der Eingangsinduktivität 8 und der Elektrode 61 der Eingangskapazität 6 den gemeinsamen Knotenpunkt 101 auf.

Das Mittel 11 zum Weiterleiten der elektrischen Ausgangsleistung an den Ausgangsanschluss 3 weist den gemeinsamen Knotenpunkt 104 der Gegenelektrode 72 der Transferkapazität 7 und des weiteren Induktivitätsanschlusses 92 der Fußpunktsinduktivität 9 auf. Dieser Knotenpunkt 104 und die Anode 51 der Ausgangdiode 5 sind elektrisch leitend miteinander verbunden. Die Kathode 52 der Ausgangsdiode 5 und der Ausgangsanschluss 3 sind elektrisch leitend miteinander verbunden und weisen den gemeinsamen Knotenpunkt 105 auf

### Beispiel 2:

Das Schaltbild der dazugehörigen elektrischen Schaltung II ist in Figur 2 dargestellt. Im Unterschied zum vorangegangenem Beispiel 1 weist hier das Mittel 11 zum Weiterleiten der elektrischen Ausgangsleistung an den Ausgangsanschluss 3 einen weiteren Bezugspotentialanschluss 13 zum Anlegen eines weiteren Bezugspotentials, einen Transformator 14 und eine Ausgangskapazität 17 auf. Der Transformator 14 ist ein HF-HV-Transformator und besteht aus der Primärinduktivität 15 und der Sekundärinduktivität 16. Primärinduktivität 15 und Sekundärinduktivität 16 sind miteinander gekoppelt. Die Primärinduktivität 15 ist die Fußpunktsinduktivität 9. Die Induktivität der Sekundärinduktivität 16 ist wie die Induktivität der Primärinduktivität 15 (Fußpunktsinduktivität 9) aus dem Bereich von 4 µH bis 40 µH ausgewählt. Die Ausgangskapazität 17 weist einen Hochfrequenzkondensator mit einer Kapazität von etwa 1500 pF auf.

Primärinduktivität 15, Sekundärinduktivität 16, weiterer Bezugspotentialanschluss 13 und Ausgangskapazität 17 sind wie folgt angeordnet:
- Der Induktivitätsanschluss 161 der Sekundärinduktivität 16 und der weitere Bezugspotentialanschluss 13 sind elektrisch leitend miteinander verbunden und weisen den gemeinsamen Knotenpunkt 106 auf.
- Der weitere Induktivitätsanschluss 162 und die Anode 51 der Ausgangsdiode 5 sind elektrisch leitend miteinander verbunden und weisen den gemeinsamen Knotenpunkt 107 auf.
- Die Gegenelektrode 172 der Ausgangskapazität 17 und der gemeinsame Knotenpunkt 106 des weiteren Bezugspotentialanschlusses 13 und des Induktivitätsanschlusses 161 der Sekundärinduktivität 16 sind elektrisch leitend miteinander verbunden.
- Die Elektrode 171 der Ausgangskapazität 17 und der gemeinsame Knotenpunkt 107 des weiteren Induktivitätsanschlusses 162 der Sekundärinduktivität 16 und der Anode 51 der Ausgangsdiode 5 sind elektrisch leitend miteinander verbunden.

### Beispiel 3:

Das Schaltbild der zugehörigen elektrischen Schaltung III ist in Figur 3 dargestellt. Im Unterschied zum Beispiel 1 wird über den Eingangsanschluss 1 eine negative Gleichspannung angelegt (zweite Lösung der zugrunde liegenden Aufgabe). Die Kathode 42 der Eingangsdiode 4 und der Eingangsanschluss 1 weisen den gemeinsamen Knotenpunkt 108 auf. Die Anode 41 der Eingangsdiode 4 weist zusammen mit dem Induktivitätsanschluss 81 der Eingangsinduktivität 8 und der Elektrode 61 der Eingangskapazität 6 den gemeinsamen Knotenpunkt 109 auf.

Das Mittel 11 zum Weiterleiten der elektrischen Ausgangsleistung an den Ausgangsanschluss 3 weist wie im Beispiel 1 den gemeinsamen Knotenpunkt 104 der Gegenelektrode 72 der Transferkapazität 7 und des weiteren Induktivitätsanschlusses 92 der Fußpunktsinduktivität 9 auf. Im Gegensatz zum Beispiel 1 ist dieser Knotenpunkt 104 und die Kathode 52 der Ausgangdiode 5 elektrisch leitend miteinander verbunden. Die Anode 52 der Ausgangsdiode 5 und der Ausgangsanschluss 3 sind elektrisch leitend miteinander verbunden und weisen den gemeinsamen Knotenpunkt 110 auf.

### Beispiel 4:

Das Schaltbild der zugehörigen elektrischen Schaltung IV ist in Figur 4 dargestellt. Im Unterschied zum Beispiel 2 wird über den Eingangsanschluss 1 eine negative Gleichspannung angelegt. Daraus ergeben sich im Vergleich zum Beispiel 2 folgende Unterschiede in der Anordnung der Elemente:
- Der weitere Induktivitätsanschluss 162 und die Kathode 52 der Ausgangsdiode 5 sind elektrisch leitend miteinander verbunden und weisen den gemeinsamen Knotenpunkt 111 auf.
- Die Elektrode 171 der Ausgangskapazität 17 und der gemeinsame Knotenpunkt 111 des weiteren Induktivitätsanschlusses 162 der Sekundärinduktivität 16 und der Kathode 52 der Ausgangsdiode 5 sind elektrisch leitend miteinander verbunden.

Die beschriebenen elektrischen Schaltungen I bis IV werden zur Leistungsfaktorkorrektur verwendet, wobei die eingespeiste elektrische Eingangsleistung leistungsfaktorkorrigiert wird. Dies bedeutet, dass die Phasen von Strom und Spannung in. Phase gebracht werden. Die maximalen Amplituden von Strom und Spannung kommen zeitlich zur Deckung. Die über die pulsierende Gleichspannung (Frequenz von 100 Hz) eingespeiste Eingangsleistung wird mit einem Wirkungsgrad von 80% bis 95% in eine Ausgangsleistung umgewandelt. Die Ausgangsleistung wird mit einer mit der Schaltfrequenz der Hochfrequenzschalters pulsierenden Gleichspannung entnommen.

### Bezugszeichenliste

- I-IV: Elektrische Schaltungen

- 1: Eingangsanschluss
- 2: Bezugspotentialanschluss
- 3: Ausgangsanschluss
- 4: Eingangsdiode
- 5: Ausgangsdiode
- 6: Eingangskapazität
- 7: Transferkapazität
- 8: Eingangsinduktivität
- 9: Fußpunktsinduktivität
- 10: Hochfrequenzschalter
- 11: Mittel zum Weiterleiten der elektrischen Ausgangsleistung an den Ausgangsanschluss
- 12: Abstimmkapazität
- 13: Weiterer Bezugspotentialanschluss
- 14: Transformator
- 15: Primärinduktivität des Transformators
- 16: Sekundärinduktivität des Transformators
- 17: Ausgangskapazität

- 41: Anode der Eingangsdiode
- 42: Kathode der Eingangsdiode

- 51: Anode der Ausgangsdiode
- 52: Kathode der Ausgangsdiode

- 61: Elektrode der Eingangskapazität
- 62: Gegenelektrode der Eingangskapazität

- 71: Elektrode der Transferkapazität
- 72: Gegenelektrode der Transferkapazität

- 81: Induktivitätsanschluss der Eingangsinduktivität
- 82: Weiterer Induktivitätsanschluss der Eingangsinduktivität

- 91: Induktivitätsanschluss der Fußpunktsinduktivität
- 92: Weiterer Induktivitätsanschluss der Fußpunktsinduktivität

- 100: Gemeinsamer Knotenpunkt des Eingangsanschlusses und der Anode der Eingangsdiode
- 101: Gemeinsamer Knotenpunkt der Kathode der Eingangsdiode, des Induktivitätsanschlusses der Eingangsinduktivität und der Elektrode der Eingangskapazität
- 102: Gemeinsamer Knotenpunkt der Gegenelektrode der Eingangskapazität, des Induktivitätsanschlusses der Fußpunktsinduktivität und des Bezugspotentialanschlusses
- 103: Gemeinsamer Knotenpunkt des weiteren Induktivitätsanschlusses der Eingangsinduktivität und der Elektrode der Transferkapazität
- 104: Gemeinsamer Knotenpunkt der Gegenelektrode der Transferkapazität und des weiteren Induktivitätsanschlusses der Fußpunktsinduktivität
- 105: Gemeinsamer Knotenpunkt des Ausgangsanschlusses und der Kathode der Ausgangsdiode
- 106: Gemeinsamer Knotenpunkt des weiteren Bezugspotentialanschlusses und des Induktivitätsanschlusses der Sekundärinduktivität
- 107: Gemeinsamer Knotenpunkt des weiteren Induktivitätsanschlusses der Sekundärinduktivität und der Anode der Ausgangsdiode
- 108: Gemeinsamer Knotenpunkt des Eingangsanschlusses und der Kathode der Eingangsdiode
- 109: Gemeinsamer Knotenpunkt der Anode der Eingangsdiode, des Induktivitätsanschlusses der Eingangsinduktivität und der Elektrode der Eingangskapazität
- 110: Gemeinsamer Knotenpunkt des Ausgangsanschlusses und der Anode der Ausgangsdiode
- 111: Gemeinsamer Knotenpunkt des weiteren Induktivitätsanschlusses der Sekundärinduktivität und der Anode der Ausgangsdiode

- 121: Elektrode der Abstimmkapazität
- 122: Gegenelektrode der Abstimmkapazität

- 151: Induktivitätsanschluss der Primärinduktivität des Transformators
- 152: Weiterer Induktivitätsanschluss der Primärinduktivität des Transformators

- 161: Induktivitätsanschluss der Sekundärinduktivität des Transformators
- 162: Weiterer Induktivitätsanschluss der Sekundärinduktivität des Transformators

- 171: Elektrode der Ausgangskapasität
- 172: Gegenelektrode der Transferkapazität

## Patentansprüche

1. Elektrische Schaltung (I, II) zur Spannungswandlung, aufweisend
- mindestens einen Eingangsanschluss (1) zum Einspeisen einer elektrischen Eingangsleistung durch Anlegen einer sich zeitlich gegenüber einem elektrischen Bezugspotential ändernden, positiven elektrischen Gleichspannung,
- mindestens einen Bezugspotentialanschluss (2) zum Anlegen des Bezugspotentials,
- mindestens einen Ausgangsanschluss (3) zur Entnahme einer elektrischen Ausgangsleistung,
- mindestens eine Eingangsdiode (4) mit einer Anode (41) und einer Kathode (42),
- mindestens eine Ausgangsdiode (5) mit einer Anode (51) und einer Kathode (52),
- mindestens eine Eingangskapazität (6) mit einer Elektrode (61) und einer Gegenelektrode (62),
- mindestens eine Transferkapazität (7) mit einer Elektrode (71) und einer Gegenelektrode (72),
- mindestens eine Eingangsinduktivität (8) mit einem Induktivitätsanschluss (81) und einem weiteren Induktivitätsanschluss (82) und
- mindestens eine Fußpunktsinduktivität (9) mit einem Induktivitätsanschluss (91) und einem weiteren Induktivitätsanschluss (92),
- die Anode (41) der Eingangsdiode (4) und der Eingangsanschluss (1) einen gemeinsamen Knotenpunkt (100) aufweisen, **dadurch gekennzeichnet, dass**
- die Kathode (42) der Eingangsdiode (4), der Induktivitätsanschluss (81) der Eingangsinduktivität (8) und die Elektrode (61) der Eingangskapazität (6) einen gemeinsamen Knotenpunkt (101) aufweisen,
- die Gegenelektrode (62) der Eingangskapazität (6), der Bezugspotentialanschluss (2) und der Induktivitätsanschluss (91) der Fußpunktsinduktivität (9) einen gemeinsamen Knotenpunkt (102) aufweisen,
- der weitere Induktivitätsanschluss (82) der Eingangsinduktivität (8) und die Elektrode (71) der Transferkapazität (7) einen gemeinsamen Knotenpunkt (103) aufweisen,
- die Gegenelektrode (72) der Transferkapazität (7) und der weitere Induktivitätsanschluss (92) der Fußpunktsinduktivität (9) einen gemeinsamen Knotenpunkt (104) aufweisen,
- ein Hochfrequenzschalter (10) zum Herstellen und/oder Unterbrechen einer elektrisch leitenden Verbindung zwischen dem Bezugspotentialanschluss (2) und dem gemeinsamen Knotenpunkt (103) des weiteren Induktivitätsanschlusses (82) der Eingangsinduktivität (8) und der Elektrode (71) der Transferkapazität (7) und
- ein Mittel (11) zum Weiterleiten der elektrischen Ausgangsleistung an den Ausgangsanschluss (3) vorhanden sind, wobei das Mittel (11) die Fußpunktsinduktivität (9) und die Ausgangsdiode (5) aufweist und die Kathode (52) der Ausgangsdiode (5) mit dem Ausgangsanschluss (3) einen gemeinsamen Knotenpunkt (105) aufweisen.

2. Schaltung nach Anspruch 1, wobei das Mittel (11) zum Weiterleiten der elektrischen Ausgangsleistung an den Ausgangsanschluss (3)
- den gemeinsame Knotenpunkt (104) der Gegenelektrode (72) der Transferkapazität (7) und des weiteren Induktivitätsanschlusses (92) der Fußpunktsinduktivität (9) aufweist und
- dieser Knotenpunkt (104) und die Anode (51) der Ausgangsdiode (5) elektrisch leitend verbunden sind.

3. Schaltung nach Anspruch 1, wobei das Mittel (11) zum Weiterleiten der elektrischen Ausgangsleistung
- mindestens einen weiteren Bezugspotentialanschluss zum Anlegen eines weiteren Bezugspotentials und
- mindestens einen Transformator (14) umfasst, der
- mindestens eine Primärinduktivität (15) mit einem Induktivitätsanschluss (151) und einem weiteren Induktivitätsanschluss (152) und
- mindestens eine Sekundärinduktivität (16) mit einem Induktivitätsanschluss (161) und einem weiteren Induktivitätsanschluss (162) aufweist,
wobei
- die Primärinduktivität (15) die Fußpunktsinduktivität (9) aufweist,
- der Induktivitätsanschluss (161) der Sekundärinduktivität (16) und der weitere Bezugspotentialanschluss (13) einen gemeinsamen Knotenpunkt (106) und
- der weitere Induktivitätsanschluss (162) und die Anode (51) der Ausgangsdiode (5) einen gemeinsamen Knotenpunkt (107) aufweisen.

4. Schaltung nach Anspruch 3, wobei das Mittel (11) zum Weiterleiten der elektrischen Ausgangsleistung
- mindestens eine Ausgangskapazität (17) mit einer Elektrode (171) und einer Gegenelektrode (172) aufweist,
- die Gegenelektrode (172) der Ausgangskapazität (17) und der gemeinsame Knotenpunkt (106) des weiteren Bezugspotentialanschlusses (13) und des Induktivitätsanschlusses (161) der Sekundärinduktivität (16) elektrisch leitend verbunden sind und
- die Elektrode (171) der Ausgangskapazität (17) und der gemeinsame Knotenpunkt (107) des weiteren Induktivitätsanschlusses (162) der Sekundärinduktivität (16) und der Anode (51) der Ausgangsdiode (5) elektrisch leitend verbunden sind.

5. Elektrische Schaltung (III, IV) zur Spannungswandlung, aufweisend
- mindestens einen Eingangsanschluss (1) zum Einspeisen einer elektrischen Eingangsleistung durch Anlegen einer sich zeitlich gegenüber einem elektrischen Bezugspotential ändernden, negativen_elektrischen Gleichspannung,
- mindestens einen Bezugspotentialanschluss (2) zum Anlegen des Bezugspotentials,
- mindestens einen Ausgangsanschluss (3) zur Entnahme einer elektrischen Ausgangsleistung,
- mindestens eine Eingangsdiode (4) mit einer Anode (41) und einer Kathode (42),
- mindestens eine Ausgangsdiode (5) mit einer Anode (51) und einer Kathode (52),
- mindestens eine Eingangskapazität (6) mit einer Elektrode (61) und einer Gegenelektrode (62),
- mindestens eine Transferkapazität (7) mit einer Elektrode (71) und einer Gegenelektrode (72),
- mindestens eine Eingangsinduktivität (8) mit einem Induktivitätsanschluss (81) und einem weiteren Induktivitätsanschluss (82) und
- mindestens eine Fußpunktsinduktivität (9) mit einem Induktivitätsanschluss (91) und einem weiteren Induktivitätsanschluss (92), **dadurch gekennzeichnet, dass**
- die Kathode (42) der Eingangsdiode (4) und der Eingangsanschluss (1) einen gemeinsamen Knotenpunkt (108) aufweisen,
- die Anode (41) der Eingangsdiode (4), der Induktivitätsanschluss (81) der Eingangsinduktivität (8) und die Elektrode (61) der Eingangskapazität (6) einen gemeinsamen Knotenpunkt (109) aufweisen,
- die Gegenelektrode (62) der Eingangskapazität (6), der Bezugspotentialanschluss (2) und der Induktivitätsanschluss (91) der Fußpunktsinduktivität (9) einen gemeinsamen Knotenpunkt (102) aufweisen,
- der weitere Induktivitätsanschluss (82) der Eingangsinduktivität (8) und die Elektrode (71) der Transferkapazität (7) einen gemeinsamen Knotenpunkt (103) aufweisen,
- die Gegenelektrode (72) der Transferkapazität (7) und der weitere Induktivitätsanschluss (92) der Fußpunktsinduktivität (9) einen gemeinsamen Knotenpunkt (104) aufweisen,
- ein Hochfrequenzschalter (10) zum Herstellen und/oder Unterbrechen einer elektrisch leitenden Verbindung zwischen dem Bezugspotentialanschluss (2) und dem gemeinsamen Knotenpunkt (103) des weiteren Induktivitätsanschlusses (82) der Eingangsinduktivität (8) und der Elektrode (71) der Transferkapazität (7) und
- ein Mittel (11) zum Weiterleiten der elektrischen Ausgangsleistung an den Ausgangsanschluss (3) vorhanden sind, wobei das Mittel (11) die Fußpunktsinduktivität (9) und die Ausgangsdiode (5) aufweist und die Anode (51) der Ausgangsdiode (5) mit dem Ausgangsanschluss (3) einen gemeinsamen Knotenpunkt (110) aufweisen.

6. Schaltung nach Anspruch 5, wobei das Mittel (11) zum Weiterleiten der elektrischen Ausgangsleistung an den Ausgangsanschluss (3)
- den gemeinsame Knotenpunkt (104) der Gegenelektrode (72) der Transferkapazität (7) und des weiteren Induktivitätsanschlusses (92) der Fußpunktsinduktivität (9) aufweist und
- dieser Knotenpunkt (104) und die Kathode (52)_der Ausgangsdiode (5) elektrisch leitend verbunden sind.

7. Schaltung nach Anspruch 5, wobei das Mittel (11) zum Weiterleiten der elektrischen Ausgangsleistung
- mindestens einen weiteren Bezugspotentialanschluss (13) zum Anlegen eines weiteren Bezugspotentials und
- mindestens einen Transformator (14) umfasst, der
- mindestens eine Primärinduktivität (15) mit einem Induktivitätsanschluss (151) und einem weiteren Induktivitätsanschluss (152) und
- mindestens eine Sekundärinduktivität (16) mit einem Induktivitätsanschluss (161) und einem weiteren Induktivitätsanschluss (162) aufweist,
wobei
- die Primärinduktivität (15) die Fußpunktsinduktivität (9) aufweist,
- der Induktivitätsanschluss (161) der Sekundärinduktivität (16) und der weitere Bezugspotentialanschluss (13) einen gemeinsamen Knotenpunkt (106) und
- der weitere Induktivitätsanschluss (162) und die Kathode (52) der Ausgangsdiode (5) einen gemeinsamen Knotenpunkt (111) aufweisen.

8. Schaltung nach einem der Ansprüche 7, wobei das Mittel (11) zum Weiterleiten der elektrischen Ausgangsleistung
- mindestens eine Ausgangskapazität (17) mit einer Elektrode (171) und einer Gegenelektrode (172) aufweist,
- die Gegenelektrode (172) der Ausgangskapazität (17) und der gemeinsame Knotenpunkt (106) des weiteren Bezugspotentialanschlusses (13) und des Induktivitätsanschlusses (161) der Sekundärinduktivität (16) elektrisch leitend verbunden sind und
- die Elektrode (171) der Ausgangskapazität (17) und der gemeinsame Knotenpunkt (111) des weiteren Induktivitätsanschlusses (162) der Sekundärinduktivität (16) und der Kathode (52) der Ausgangsdiode (5) elektrisch leitend verbunden sind.

9. Schaltung nach einem der Ansprüche 3, 4, 7 und 8, wobei der Transformator (15) ein Hochfrequenz-Hochvolt-Transformator ist.

10. Schaltung nach einem der Ansprüche 1 bis 9, wobei
- zur Schaltentlastung des Hochfrequenzschalters (10) mindestens eine Abstimmkapazität (12) mit einer Elektrode (121) und einer Gegenelektrode (122) vorhanden ist,
- die Elektrode (121) der Abstimmkapazität (12) und der gemeinsame Knotenpunkt (103) des weiteren Induktivitätsanschlusses (82) der Eingangsinduktivität (8) und der Elektrode (71) der Transferkapazität (7) elektrisch leitend verbunden sind und
- die Gegenelektrode (122) der Abstimmkapazität (12) und der Bezugspotentialanschluss (2) elektrisch leitend verbunden sind.

11. Schaltung nach einem der Ansprüche 1 bis 10, wobei der Hochfrequenzschalter mindestens einen MOS-Transistor aufweist.

12. Schaltung nach einem der Ansprüche 1 bis 11, wobei der Hochfrequenzschalter (10) eine aus dem Bereich von einschließlich 500 kHz bis einschließlich 200 MHz ausgewählte Schaltfrequenz aufweist.

13. Schaltung nach einem der Ansprüche 1 bis 12, wobei die Eingangskapazität (6) und/oder die Transferkapazität (7) mindestens einen Hochfrequenzkondensator mit einer aus dem Bereich von einschließlich 10 pF bis einschließlich 1000 pF ausgewählten Kapazität aufweisen.

14. Schaltung nach einem der Ansprüche 10 bis 13, wobei die Abstimmkapazität (12) mindestens einen Hochfrequenzkondensator mit einer aus dem Bereich von einschließlich 10 pF bis einschließlich 200 pF ausgewählten Kapazität aufweist.

15. Schaltung nach einem der Ansprüche 4 und 8 bis 14, wobei die Ausgangskapazität (17) mindestens einen Hochfrequenzkondensator mit einer aus dem Bereich von einschließlich 300 pF bis einschließlich 3000 pF ausgewählten Kapazität aufweist.

16. Schaltung nach einem der Ansprüche 1 bis 15, wobei die Eingangsinduktivität (8), die Fußpunktsinduktivität (9), die Primärinduktivität (15) und/oder die Sekundärinduktivität (16) eine aus dem Bereich von einschließlich 0,3 µH bis 100 µH ausgewählte Induktivität aufweisen.

17. Schaltung nach einem der Ansprüche 1 bis 16, wobei die Eingangsdiode (4) und/oder die Ausgangsdiode (5) eine Schottkydiode ist, die mindestens ein aus der Gruppe SiC und/oder GaAs ausgewähltes Diodenmaterial aufweist.

18. Verwendung der Schaltung nach einem der Ansprüche 1 bis 17 zur Leistungsfaktorkorrektur, wobei eine aus einem Netz entnommene Leistung im Leistungsfaktor korrigiert wird.

## Claims

1. Electrical circuit (I, II) for voltage transformation, having
- at least one input terminal (1) for feeding in an electrical input power by applying a positive electrical DC voltage that changes temporally with respect to an electrical reference potential,
- at least one reference potential terminal (2) for applying the reference potential,
- at least one output terminal (3) for drawing an electrical output power,
- at least one input diode (4) having an anode (41) and a cathode (42),
- at least one output diode (5) having an anode (51) and a cathode (52),
- at least one input capacitance (6) having an electrode (61) and a counterelectrode (62),
- at least one transfer capacitance (7) having an electrode (71) and a counterelectrode (72),
- at least one input inductance (8) having an inductance terminal (81) and a further inductance terminal (82), and
- at least one base point inductance (9) having an inductance terminal (91) and a further inductance terminal (92),
- the anode (41) of the input diode (4) and the input terminal (1) have a common node (100), **characterized in that**
- the cathode (42) of the input diode (4), the inductance terminal (81) of the input inductance (8) and the electrode (61) of the input capacitance (6) have a common node (101),
- the counterelectrode (62) of the input capacitance (6), the reference potential terminal (2) and the inductance terminal (91) of the base point inductance (9) have a common node (102),
- the further inductance terminal (82) of the input inductance (8) and the electrode (71) of the transfer capacitance (7) have a common node (103),
- the counterelectrode (72) of the transfer capacitance (7) and the further inductance terminal (92) of the base point inductance (9) have a common node (104),
- a radiofrequency switch (10) for producing and/or interrupting an electrically conductive connection between the reference potential terminal (2) and the common node (103) of the further inductance terminal (82) of the input inductance (8) and the electrode (71) of the transfer capacitance (7) and
- a means (11) for forwarding the electrical output power to the output terminal (3) are present, the means (11) having the base point inductance (9) and the output diode (5) and the cathode (52) of the output diode (5) having a common node (105) with the output terminal (3).

2. Circuit according to Claim 1, the means (11) for forwarding the electrical output power to the output terminal (3) having
- the common node (104) of the counterelectrode (72) of the transfer capacitance (7) and the further inductance terminal (92) of the base point inductance (9), and
- said node (104) and the anode (51) of the output diode (5) being electrically conductively connected.

3. Circuit according to Claim 1, the means (11) for forwarding the electrical output power comprising
- at least one further reference potential terminal for applying a further reference potential and
- at least one transformer (14), having
- at least one primary inductance (15) having an inductance terminal (151) and a further inductance terminal (152) and
- at least one secondary inductance (16) having an inductance terminal (161) and a further inductance terminal (162),
in which case
- the primary inductance (15) has the base point inductance (9),
- the inductance terminal (161) of the secondary inductance (16) and the further reference potential terminal (13) have a common node (106) and
- the further inductance terminal (162) and the anode (51) of the output diode (5) have a common node (107).

4. Circuit according to Claim 3, the means (11) for forwarding the electrical output power having
- at least one output capacitance (17) having an electrode (171) and a counterelectrode (172),
- the counterelectrode (172) of the output capacitance (17) and the common node (106) of the further reference potential terminal (13) and the inductance terminal (161) of the secondary inductance (16) being electrically conductively connected and
- the electrode (171) of the output capacitance (17) and the common node (107) of the further inductance terminal (162) of the secondary inductance (16) and the anode (51) of the output diode (5) being electrically conductively connected.

5. Electrical circuit (III, IV) for voltage transformation, having
- at least one input terminal (1) for feeding in an electrical input power by applying a negative electrical DC voltage that changes temporally with respect to an electrical reference potential,
- at least one reference potential terminal (2) for applying the reference potential,
- at least one output terminal (3) for drawing an electrical output power,
- at least one input diode (4) having an anode (41) and a cathode (42),
- at least one output diode (5) having an anode (51) and a cathode (52),
- at least one input capacitance (6) having an electrode (61) and a counterelectrode (62),
- at least one transfer capacitance (7) having an electrode (71) and a counterelectrode (72),
- at least one input inductance (8) having an inductance terminal (81) and a further inductance terminal (82), and
- at least one base point inductance (9) having an inductance terminal (91) and a further inductance terminal (92),
**characterized in that**
- the cathode (42) of the input diode (4) and the input terminal (1) have a common node (108),
- the anode (41) of the input diode (4), the inductance terminal (81) of the input inductance (8) and the electrode (61) of the input capacitance (6) have a common node (109),
- the counterelectrode (62) of the input capacitance (6), the reference potential terminal (2) and the inductance terminal (91) of the base point inductance (9) have a common node (102),
- the further inductance terminal (82) of the input inductance (8) and the electrode (71) of the transfer capacitance (7) have a common node (103),
- the counterelectrode (72) of the transfer capacitance (7) and the further inductance terminal (92) of the base point inductance (9) have a common node (104),
- a radiofrequency switch (10) for producing and/or interrupting an electrically conductive connection between the reference potential terminal (2) and the common node (103) of the further inductance terminal (82) of the input inductance (8) and the electrode (71) of the transfer capacitance (7) and
- a means (11) for forwarding the electrical output power to the output terminal (3) are present, the means (11) having the base point inductance (9) and the output diode (5) and the anode (51) of the output diode (5) having a common node (110) with the output terminal (3).

6. Circuit according to Claim 5, the means (11) for forwarding the electrical output power to the output terminal (3) having
- the common node (104) of the counterelectrode (72) of the transfer capacitance (7) and the further inductance terminal (92) of the base point inductance (9), and
- said node (104) and the cathode (52) of the output diode (5) being electrically conductively connected.

7. Circuit according to Claim 5, the means (11) for forwarding the electrical output power comprising
- at least one further reference potential terminal (13) for applying a further reference potential and
- at least one transformer (14), having
- at least one primary inductance (15) having an inductance terminal (151) and a further inductance terminal (152) and
- at least one secondary inductance (16) having an inductance terminal (161) and a further inductance terminal (162),
in which case
- the primary inductance (15) has the base point inductance (9),
- the inductance terminal (161) of the secondary inductance (16) and the further reference potential terminal (13) have a common node (106) and
- the further inductance terminal (162) and the cathode (52) of the output diode (5) have a common node (111).

8. Circuit according to Claim 7, the means (11) for forwarding the electrical output power having
- at least one output capacitance (17) having an electrode (171) and a counterelectrode (172),
- the counterelectrode (172) of the output capacitance (17) and the common node (106) of the further reference potential terminal (13) and the inductance terminal (161) of the secondary inductance (16) being electrically conductively connected and
- the electrode (171) of the output capacitance (17) and the common node (111) of the further inductance terminal (162) of the secondary inductance (16) and the cathode (52) of the output diode (5) being electrically conductively connected.

9. Circuit according to one of Claims 3, 4, 7 and 8, the transformer (15) being a radiofrequency/high-voltage transformer.

10. Circuit according to one of Claims 1 to 9, in which case
- for the purpose of relieving the switching load on the radiofrequency switch (10), at least one tuning capacitance (12) having an electrode (121) and a counterelectrode (122) is present,
- the electrode (121) of the tuning capacitance (12) and the common node (103) of the further inductance terminal (82) of the input inductance (8) and the electrode (71) of the transfer capacitance (7) are electrically conductively connected and
- the counterelectrode (122) of the tuning capacitance (12) and the reference potential terminal (2) are electrically conductively connected.

11. Circuit according to one of Claims 1 to 10, the radiofrequency switch having at least one MOS transistor.

12. Circuit according to one of Claims 1 to 11, the radiofrequency switch (10) having a switching frequency selected from the range of 500 kHz to 200 MHz inclusive.

13. Circuit according to one of Claims 1 to 12, the input capacitance (6) and/or the transfer capacitance (7) having at least one radiofrequency capacitor having a capacitance selected from the range of 10 pF to 1000 pF inclusive.

14. Circuit according to one of Claims 10 to 13, the tuning capacitance (12) having at least one radiofrequency capacitor having a capacitance selected from the range of 10 pF to 200 pF inclusive.

15. Circuit according to one of Claims 4 and 8 to 14, the output capacitance (17) having at least one radiofrequency capacitor having a capacitance selected from the range of 300 pF to 3000 pF inclusive.

16. Circuit according to one of Claims 1 to 15, the input inductance (8), the base point inductance (9), the primary inductance (15) and/or the secondary inductance (16) having an inductance selected from the range of 0.3 µH to 100 µH inclusive.

17. Circuit according to one of Claims 1 to 16, the input diode (4) and/or the output diode (5) being a Schottky diode having at least one diode material selected from the group SiC and/or GaAs.

18. Use of the circuit according to one of Claims 1 to 17 for power factor correction, a power drawn from a power supply system being corrected in terms of the power factor.

## Revendications

1. Circuit (I, II) électrique convertisseur de tension, comprenant
- au moins une borne (1) d'entrée pour injecter une puissance électrique d'entrée par application d'une tension électrique continue positive se modifiant dans le temps par rapport à un potentiel électrique de référence,
- au moins une borne (2) de potentiel de référence pour appliquer le potentiel de référence,
- au moins une borne (3) de sortie pour prélever une puissance électrique de sortie,
- au moins une diode (4) d'entrée ayant une anode (41) et une cathode (42),
- au moins une diode (5) de sortie ayant une anode (51) et une cathode (52),
- au moins une capacité (6) d'entrée ayant une électrode (61) et une contre électrode (62),
- au moins une capacité (7) de transfert ayant une électrode (71) et une contre électrode (72),
- au moins une résistance (8) d'entrée ayant une borne (81) d'inductance et une autre borne (82) d'inductance, et
- au moins une inductance (9) de base ayant une borne (91) d'inductance et une autre borne (92) d'inductance,
- l'anode (41) de la diode (4) d'entrée et la borne (1) d'entrée ayant un point (100) nodal commun, **caractérisé en ce que**
- la cathode (42) de la diode (4) d'entrée, la borne (81) de l'inductance (8) d'entrée et l'électrode (61) de la capacité (6) d'entrée ont un point (101) nodal commun,
- la contre électrode (62) de la capacité (6) d'entrée, la borne (2) de potentiel de référence et la borne (91) de l'inductance (9) de base ont un point (102) nodal commun,
- l'autre borne (82) de l'inductance (8) d'entrée l'électrode (71) de la capacité (7) de transfert ont un point (103) nodal commun,
- la contre électrode (72) de la capacité (7) de transfert et l'autre borne (92) de l'inductance (9) de base ont un point (104) nodal commun,
- un interrupteur (10) de haute fréquence pour ménager et/ou interrompre une liaison conductrice de l'électricité entre la borne (2) de potentiel de référence et le point (103) nodal commun de l'autre borne (82) de l'inductance (8) d'entrée et l'électrode (71) de la capacité (7) de transfert, et
- il est prévu un moyen (11) d'acheminement de la puissance électrique de sortie à la borne (3) de sortie, le moyen (11) ayant l'inductance (9) de base et la diode (5) de sortie et la cathode (52) de la diode (5) de sortie ayant un point (105) nodal commun avec la borne (3) de sortie.

2. Circuit suivant la revendication 1, dans lequel le moyen (11) d'acheminement de la puissance électrique de sortie à la borne (3) de sortie
- a le point (104) nodal commun de la contre électrode (72) de la capacité (7) de transfert et de l'autre borne (92) de l'inductance (9) de base et
- ce point (104) nodal et l'anode (51) de la diode (5) de sortie sont reliés d'une manière conductrice de l'électricité.

3. Circuit suivant la revendication 1, dans lequel le moyen (11) d'acheminement de la puissance électrique de sortie
- a au moins une autre borne de potentiel de référence pour l'application d'un autre potentiel de référence et
- au moins un transformateur (14), qui
- a au moins une inductance (15) primaire ayant une borne (151) d'inductance et une autre borne (152) d'inductance et
- au moins une inductance (16) secondaire ayant une borne (161) d'inductance et une autre borne (162) d'inductance,
dans lequel
- l'inductance (15) primaire a l'inductance (9) de base,
- la borne (161) de l'inductance (16) secondaire et l'autre borne (13) de potentiel de référence ont un point (106) nodal commun et
- l'autre borne (162) d'inductance et l'anode (51) de la diode (5) de sortie ont un point (107) nodal commun.

4. Circuit suivant la revendication 3, dans lequel le moyen (11) d'acheminement de la puissance électrique de sortie
- a au moins une capacité (17) de sortie ayant une électrode (171) et une contre électrode (172),
- la contre électrode (172) de la capacité (17) de sortie et le point (106) nodal commun de l'autre borne (13) de potentiel de référence et de la borne (161) de l'inductance (16) secondaire sont reliés d'une manière conductrice d'électricité et
- l'électrode (171) de la capacité (17) de sortie et le point (107) nodal commun de l'autre borne (162) de l'inductance (16) secondaire et l'anode (51) de la diode (5) de sortie sont reliés d'une manière conductrice de l'électricité.

5. Circuit (III, IV) électrique convertisseur de tension comprenant
- au moins une borne (1) d'entrée pour injecter une puissance électrique d'entrée en appliquant une tension continue électrique négative se modifiant dans le temps par rapport à un potentiel électrique de référence,
- au moins une borne (2) de potentiel de référence pour appliquer le potentiel de référence,
- au moins une borne (3) de sortie pour prélever une puissance électrique de sortie,
- au moins une diode (4) d'entrée ayant une anode (41) et une cathode (42),
- au moins une diode (5) de sortie ayant une anode (51) et une cathode 52),
- au moins une capacité (6) d'entrée ayant une électrode (61) et une contre électrode (62),
- au moins une capacité (7) de transfert ayant une électrode (71) et une contre électrode (72),
- au moins une inductance (8) d'entrée ayant une borne (81) d'inductance et une autre borne (82) d'inductance et
- au moins une inductance (9) de base ayant une borne (91) d'inductance et une autre borne (92) d'inductance,
**caractérisé en ce que**
- la cathode (42) de la diode (4) d'entrée et la borne (1) d'entrée ont un point (108) nodal commun,
- l'anode (41) de la diode (4) d'entrée, la borne (81) de l'inductance (6) d'entrée et l'électrode (61) de la capacité (6) d'entrée ont un point (109) nodal commun,
- la contre électrode (62) de la capacité (6) d'entrée, la borne (2) de potentiel de référence et la borne (91) de l'inductance (9) de base ont un point (102) nodal commun,
- l'autre borne (82) de l'inductance (8) et l'électrode (71) de la capacité (7) de transfert ont un point (103) nodal commun,
- la contre électrode (72) de la capacité (7) de transfert et l'autre borne (92) de l'inductance (9) de base ont un point (104) nodal commun,
- un interrupteur (10) de haute fréquence pour ménager et/ou interrompre une liaison conductrice de l'électricité entre la borne (2) de potentiel de référence et le point (103) nodal commun de l'autre borne (82) de l'inductance (8) d'entrée et de l'électrode (71) de la capacité (7) de transfert et,
- un moyen (11) d'acheminement de la puissance électrique de sortie à la borne (3) de sortie est présent, le moyen (11) ayant l'inductance (9) de base et la diode (5) de sortie et l'anode (51) de la diode (5) de sortie ayant un point (110) nodal commun avec la borne (3) de sortie.

6. Circuit suivant la revendication 5, dans lequel le moyen (11) d'acheminement de la puissance électrique de sortie à la borne (3) de sortie,
- a le point (104) nodal commun de la contre électrode (72) de la capacité (7) et de l'autre borne (92) de l'inductance (9) de base et
- ce point (104) nodal et la cathode (52) de la diode (5) de sortie sont reliés d'une manière conductrice de l'électricité.

7. Circuit suivant la revendication 5, dans lequel le moyen (11) d'acheminement de la puissance électrique de sortie comprend
- au moins une autre borne (13) de potentiel de référence pour l'application d'un autre potentiel de référence et
- au moins un transformateur (14) qui a
- au moins une inductance (15) primaire ayant une borne (151) d'inductance et une autre borne (152) d'inductance et
- au moins une inductance (16) secondaire ayant une borne (161) d'inductance et une autre borne (162) d'inductance,
dans lequel
- l'inductance (15) primaire a l'inductance (9) de base,
- la borne (161) d'inductance (16) secondaire et la borne (13) de potentiel de référence ont un point (106) nodal commun et
- l'autre borne (162) d'inductance et la cathode (52) de la diode (5) de sortie ont un point (111) nodal commun.

8. Circuit suivant l'une des revendications 7, dans lequel le moyen (11) d'acheminement de la puissance électrique de sortie a
- au moins une capacité (17) de sortie ayant une électrode (171) et une contre électrode (172),
- la contre électrode (172) de la capacité (17) de sortie et le point (106) nodal commun de l'autre borne (13) de potentiel de référence et de la borne (161) de l'inductance (16) secondaire sont reliés d'une manière conductrice de l'électricité et
- l'électrode (171) de la capacité (17) de sortie et le point (111) nodal commun de l'autre borne (162) de l'inductance (16) secondaire et de la cathode (52) de la diode (5) de sortie sont reliés d'une manière conductrice de l'électricité.

9. Circuit suivant l'une des revendications 3, 4, 7 et 8, dans lequel le transformateur (15) est un transformateur de haute tension à haute fréquence.

10. Circuit suivant l'une des revendications 1 à 9, dans lequel
- pour soulager l'interrupteur (10) de haute fréquence, il est prévu au moins une capacité (12) d'accord ayant une électrode (121) et une contre électrode (122),
- l'électrode (121) de la capacité (12) d'accord et le point (103) nodal commun de l'autre borne (82) de l'inductance (8) d'entrée et de l'électrode (71) de la capacité (7) de transfert sont reliés d'une manière conductrice d'électricité et,
- la contre électrode (122) de la capacité (12) d'accord et la borne (2) de potentiel de référence sont reliées d'une manière conductrice de l'électricité.

11. Circuit suivant l'une des revendications 1 à 10, dans lequel l'interrupteur de haute fréquence comporte au moins un transistor MOS.

12. Circuit suivant l'une des revendications 1 à 11, dans lequel l'interrupteur (10) de haute fréquence a une fréquence d'interruption choisie dans la plage allant de 500 kHz inclus à 200 MHz inclus.

13. Circuit suivant l'une des revendications 1 à 12, dans lequel la capacité (6) d'entrée et/ou la capacité (7) de transfert ont au moins un condensateur de haute fréquence ayant une capacité choisie dans la plage allant de 10 pF inclus à 1000 pH inclus.

14. Circuit suivant l'une des revendications 10 à 13, dans lequel la capacité (12) d'accord a au moins un condensateur de haute fréquence ayant une capacité choisie dans la plage allant de 10 pF inclus à 200 pF inclus.

15. Circuit suivant l'une des revendications 4 et 8 à 14, dans lequel la capacité (17) de sortie a au moins un condensateur de haute fréquence ayant une capacité choisie dans la plage allant de 300 pF inclus à 3000 pF inclus.

16. Circuit suivant l'une des revendications 1 à 15, dans lequel l'inductance (8) d'entrée, l'inductance (9à) de base, l'inductance (15) primaire et/ou l'inductance (16) secondaire ont une inductance choisie dans la plage allant de y compris 0,3 µH à 100 µH.

17. Circuit suivant l'une des revendications 1 à 16, dans lequel la diode (4) d'entrée et/ou la diode (5) de sortie est une diode de Schottky qui a au moins un matériau de diode choisi dans le groupe SiC et/ou GaAs.

18. Utilisation du circuit suivant l'une des revendications 1 à 17, pour la correction d'un facteur de puissance, dans laquelle on corrige en facteur de puissance une puissance prélevée d'un réseau.
